(19) Europäisches Patentamt
European Patent Office
Office européen des brevets

(11) **EP 3 667 373 B1**

(12) **FASCICULE DE BREVET EUROPEEN**

(45) Date de publication et mention de la délivrance du brevet:
**22.09.2021 Bulletin 2021/38**

(51) Int Cl.:
***G01V 99/00*** *(2009.01)*

(21) Numéro de dépôt: **19211977.4**

(22) Date de dépôt: **28.11.2019**

(54) **PROCÉDÉ D'EXPLOITATION D'UN GISEMENT D'HYDROCARBURES AU MOYEN D'UNE SIMULATION DE BASSIN ET D'UN MODÈLE CINÉTIQUE COMPOSITIONNEL**

**VERFAHREN ZUM ABBAU EINES KOHLENWASSERSTOFFLAGERS MITHILFE EINER BECKENSIMULATION UND EINES KINETISCHEN MODELLS DER ZUSAMMENSETZUNG**

**METHOD FOR EXPLOITING A HYDROCARBON DEPOSIT BY MEANS OF A BASIN SIMULATION AND A COMPOSITIONAL KINETIC MODEL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2018 FR 1872998**

(43) Date de publication de la demande:
**17.06.2020 Bulletin 2020/25**

(73) Titulaire: **IFP Energies nouvelles**
**92852 Rueil-Malmaison Cedex (FR)**

(72) Inventeurs:
• **DUBILLE, Mathieu**
**78220 Viroflay (FR)**
• **ROMERO-SARMIENTO, Maria-Fernanda**
**92852 Rueil-Malmaison Cedex (FR)**
• **MAURAND MANDEIX, Nicolas**
**92852 Rueil-Malmaison Cedex (FR)**
• **TRABY, Renaud**
**92852 Rueil-Malmaison Cedex (FR)**

(56) Documents cités:
**EP-A1- 1 884 620      EP-A1- 2 775 092**
**FR-A1- 2 906 482**

## Description

## Domaine technique

La présente invention concerne le domaine de l'exploration et de l'exploitation des gisements pétroliers.

L'exploration pétrolière consiste à rechercher des gisements d'hydrocarbures au sein d'un bassin sédimentaire. La compréhension des principes de la genèse des hydrocarbures et leurs liens avec l'histoire géologique du sous-sol, a permis la mise au point de méthodes d'évaluation du potentiel pétrolier d'un bassin sédimentaire. La démarche générale de l'évaluation du potentiel pétrolier d'un bassin sédimentaire comporte des allers-retours entre:

- une prédiction du potentiel pétrolier du bassin sédimentaire, réalisée à partir d'informations disponibles concernant le bassin étudié (affleurements, campagnes sismiques, forages par exemple).

- des forages d'exploration dans les différentes zones présentant le meilleur potentiel, afin de confirmer ou infirmer le potentiel prédit préalablement, et d'acquérir de nouvelles données pour alimenter de nouvelles études plus précises.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation optimaux pour ces zones (par exemple à l'aide d'une simulation de réservoir, afin de définir les nombre et positions des puits d'exploitation permettant une récupération d'hydrocarbures optimale, ainsi que le type de récupération), à forer des puits d'exploitation et, de façon générale, à mettre en place les infrastructures de production nécessaires au développement du gisement.

Dans certains bassins sédimentaires, ayant subi une histoire géologique compliquée, faisant interagir de nombreux processus physiques, ou lorsque le volume de données est très important, l'évaluation du potentiel pétrolier d'un bassin sédimentaire requiert de disposer d'outils informatiques permettant la synthèse des données disponibles, et d'outils informatiques permettant la simulation de l'histoire géologique et des multiples processus physiques qui la contrôlent. Il s'agit d'une démarche dite de « modélisation de bassin ». La famille des logiciels dits de modélisation de bassin permettent de simuler en une, deux ou trois dimensions, les processus sédimentaires, tectoniques, thermiques, hydrodynamiques et de chimie organique et inorganique qui interviennent lors de la formation d'un bassin pétrolier. La modélisation de bassin comporte classiquement trois étapes :

- une étape de construction d'une représentation maillée du bassin étudié, connue sous le terme de géo-modélisation. Cette représentation maillée est le plus souvent structurée en couches, c'est-à-dire qu'un groupe de mailles est affecté à chaque couche géologique du bassin modélisé. Puis, chaque maille de cette représentation maillée est remplie par une ou plusieurs propriétés pétrophysiques, telles que la porosité, le faciès (argile, sable, etc) ou encore leur teneur en matière organique au moment de leur sédimentation. La construction de ce modèle se base sur des données acquises au cours de campagnes sismiques, de mesures dans des puits, de carottages, etc.

- une étape de reconstruction structurale de cette représentation maillée, représentant des états antérieurs de l'architecture du bassin. Cette étape peut être réalisée à l'aide d'une méthode dite de "backstripping" (Steckler et al., 1978) ou encore par une méthode dite de restauration structurale (EP 2110686).

- une étape de simulation numérique d'une sélection de phénomènes physiques se déroulant au cours de l'évolution du bassin et contribuant à la formation des pièges pétroliers. Cette étape, connue sous le terme de « simulation de bassin », s'appuie sur une représentation discrétisée de l'espace et du temps. En particulier, une simulation de bassin fournit une cartographie prédictive du sous-sol, indiquant l'emplacement probable des gisements, ainsi que la teneur, la nature et la pression des hydrocarbures qui y sont piégés. On connait des outils de simulation de bassin qui permettent de simuler numériquement la formation d'un bassin sédimentaire. On citera par exemple l'outil décrit dans le brevet EP2110686 (US8150669) ou les demandes de brevet EP2816377 (US2014/0377872), EP3075947 (US2016/0290107), EP3182176 (US2017/0177764). Ces outils visent à estimer l'évolution de la température dans l'ensemble d'un bassin sédimentaire, ainsi que l'avancement de la réaction de transformation de la matière organique en hydrocarbures, à une volumétrie ainsi qu'une composition des fluides générés au cours du temps.

L'essentiel des réserves pétrolières connues correspond à des fluides d'origine organique. La matière organique est très variable en termes de composition élémentaire et de potentiel de génération d'hydrocarbures. Ces variations s'expliquent d'une part par l'origine même de la matière organique qui peut provenir de micro-organismes marins, d'algues lacustres ou de plantes supérieures par exemple et d'autre part de l'état de préservation de la matière organique qui peut notamment être oxydée ou dégradée par des micro-organismes.

Les principales étapes d'évolution de la matière organique sont très fortement liées à l'augmentation de la température dans le sous-sol avec l'enfouissement progressif. Pendant l'étape de catagenèse, on assiste à la transformation du kérogène principalement en hydrocarbures, entre autres. Cette transformation de la matière organique est une fonction du temps et de la température.

Afin d'étudier de manière plus fine les systèmes pétroliers et de mieux prédire les quantités et la qualité des hydrocarbures produits par les roches mères dans les bassins sédimentaires, les géologues spécialistes en bassin sédimentaire utilisent depuis maintenant plusieurs décennies des modèles quantitatifs et qualitatifs de transformation de la matière organique.

Il est en effet largement admis que l'on peut reproduire de façon satisfaisante les mécanismes de craquage thermique de la matière organique par des modèles cinétiques. Ces modèles cinétiques peuvent être compositionnels ou non. Dans le cas des modèles cinétiques non-compositionnels (on parle aussi de modèles cinétiques « bulk »), on suppose qu'une réaction chimique n'a qu'un seul produit de réaction (par exemple, le kérogène va se transformer en un fluide) et on simule seulement le craquage primaire de la matière organique. Dans le cas de modèles cinétiques compositionnels, ces modèles reproduisent des réactions pour lesquelles la réaction de craquage donne plusieurs produits (par exemple le kérogène se convertit en gaz, huile et coke) et on simule le craquage primaire de la matière organique ainsi que le craquage secondaire des produits générés.

## Technique antérieure

R. Braun, A. Burnham, J. G. Reynolds and J.E. Clarkson, Pyrolysis kinetics for Lacustrine and Marine Source Rocks by programmed micropyrolisis - Energy Fuels, 1991, 5 (1), pp 192-204

Pepper and Corvi (1995). Simple kinetic models of petroleum formation. Part 1 : oil and gas génération from kerogen

Les modèles cinétiques sont calibrés à partir d'expérimentations réalisées en laboratoire sur des échantillons de kérogènes issus d'une roche-mère. Plus précisément, ces expériences visent à déterminer les paramètres cinétiques d'un modèle cinétique. Grâce au modèle cinétique intégrant ces paramètres cinétiques, il est alors possible d'estimer l'évolution de la transformation de la matière organique et donc la quantité d'hydrocarbures produite au cours du temps.

Pour déterminer ces paramètres cinétiques, il faut au préalable échantillonner des zones représentatives de la roche mère n'ayant pas encore commencé de processus de transformation thermique. On distingue deux types d'analyse, visant à déterminer les paramètres cinétiques relatifs à :

- une cinétique non-compositionnelle : dans ce cas, il s'agit d'une analyse de laboratoire utilisée en routine dans l'industrie pétrolière. Elle consiste habituellement en une pyrolyse en milieu ouvert, entre des températures comprises environ entre 200 et 700°C. Une telle analyse peut être effectuée par exemple au moyen du dispositif ROCK-EVAL® (IFP Energies nouvelles, France). Au cours d'une telle analyse, on reproduit la maturation artificielle d'un kérogène issu d'une roche mère immature pour différents rampes de chauffes (2, 5, 10, 15 et 25°C/min). Ces expériences permettent d'acquérir des données qui vont permettre de caractériser toutes les réactions parallèles de la transformation de matière organique, et ainsi permettre d'estimer les paramètres cinétiques de l'équation d'Arrhenius (facteur de fréquence $A_i$, énergie d'activation $E_i$ et contributions relatives de chacune des réactions unitaires, parallèles à la réaction totale $X_i$ ; cf. ci-après).

- une cinétique compositionnelle : dans ce cas, les analyses requises sont beaucoup plus longues et onéreuses que pour une cinétique non compositionnelle, ce qui a pour conséquence un usage plus sporadique par les compagnies pétrolières. Les analyses débutent classiquement par une pyrolyse préparatoire donnant une cinétique globale en milieu ouvert non compositionnelle sur l'échantillon de kérogène isolé tel que décrit ci-dessus. Puis cette information est complétée par des séries de chauffes en milieu fermé (par exemple dans des tubes en or) à différents temps et températures en double (par exemple un premier tube pour les analyses de gaz et un deuxième tube pour les analyses des liquides et résidus). Cet ensemble de procédures de caractérisation des fluides, plus complexe expérimentalement, nécessite un grand nombre d'analyses et de traitement de l'information. Ces analyses sont réalisées par pyrolyses en milieu fermé d'un échantillon de kérogène isolé afin de prédire la composition des fluides générés dans la fenêtre à huile (entre 250 et 375°C pour le laboratoire) et/ou fenêtre à gaz (entre 400 et 550°C pour le laboratoire) en intégrant le craquage primaire de la matière organique initiale ainsi que le craquage secondaire des composés générés. Ces expériences permettent de quantifier les produits liquides, gazeux et solides générés issus de la réaction de la transformation de la matière organique sélectionnée à différents temps (t) et différentes températures (T). Un schéma cinétique compositionnel est donc construit à partir de quantités obtenues, grâce à un bilan massique complet, pour chaque couple de réaction t/T. Ces mesures permettent de caractériser et quantifier les produits de réaction. On détermine ainsi les paramètres cinétiques de l'équation d'Arrhenius : facteur de fréquence $A_i$, énergie d'activation $E_i$, contributions $X_i$ relatives de chacune des réactions unitaires parallèles à la réaction totale, et composition (ou stœchiométrie) des produits de réaction pour chacune des réactions unitaires. Ces propositions relatives de chacun des produits, pour chacune des réactions unitaires, sont habituellement notées ni.

Lorsque les géologues de bassin ne possèdent pas d'échantillon pour effectuer des analyses de laboratoire, il est courant qu'ils utilisent des cinétiques existantes, par exemple publiées dans la littérature tel que dans le document (Braun et al.,1991). Toutefois, la plupart des cinétiques mises à la disposition du public sont non-compositionnelles, ou encore ont été établies selon un nombre de classes de composés qui n'est pas celui souhaité par l'opérateur.

Un document de l'art antérieur est FR 2 906 482 qui divulgue la méthode de regroupement, utilisée pour simplifier le modèle cinétique.

La présente invention vise à convertir tout schéma cinétique non compositionnel en un schéma cinétique compositionnel ayant un nombre de classes de composés choisi par l'utilisateur, ou encore de convertir tout schéma cinétique compositionnel, caractérisé par un nombre de classes de composés chimiques donné en un schéma cinétique compositionnel défini par un nombre de classes de composés différent, choisi par l'utilisateur en fonction de ses besoins.

Le procédé selon l'invention permet ainsi de déterminer un schéma cinétique compositionnel répondant aux besoins opérationnels, à partir de cinétiques de craquage primaire compositionnelles ou non-compositionnelles existantes, propriétaires ou publiques, sans avoir à effectuer de mesures de laboratoire longues et coûteuses.

**Résumé de l'invention**

La présente invention concerne un procédé mis en oeuvre par ordinateur pour déterminer la quantité et/ou la qualité des hydrocarbures présents dans un bassin sédimentaire, lesdits hydrocarbures ayant été générés par maturation de la matière organique d'une roche-mère dudit bassin, au moyen d'un simulateur numérique de bassin comprenant un modèle cinétique, ledit modèle cinétique étant appliqué avec des paramètres cinétiques pour reproduire la transformation de la matière organique en au moins un composé chimique sous l'effet de l'augmentation des températures, à partir de paramètres cinétiques relatifs à ladite roche-mère et relatifs à une première représentation compositionnelle.

Le procédé selon l'invention comprend la détermination des paramètres cinétiques relatifs à ladite roche-mère et relatifs à une deuxième représentation compositionnelle en appliquant au moins les étapes suivantes au moyen dudit modèle cinétique :

A) à partir de paramètres cinétiques relatifs à au moins une roche-mère de référence et relatifs à ladite deuxième représentation compositionnelle, et à partir de paramètres cinétiques relatifs à une roche de référence et relatifs à ladite deuxième représentation compositionnelle, on détermine une référence compositionnelle pour ladite deuxième représentation compositionnelle sous la forme d'une évolution d'une proportion de chacun des composés chimiques de ladite deuxième représentation compositionnelle en fonction d'un taux de transformation de ladite roche de référence ;

B) à partir desdits paramètres cinétiques relatifs à ladite roche-mère et relatifs à ladite première représentation compositionnelle, et à partir de ladite référence compositionnelle déterminée pour ladite deuxième représentation compositionnelle, on détermine des paramètres cinétiques relatifs à ladite roche-mère et relatifs à ladite deuxième représentation compositionnelle ;

Puis, le procédé selon l'invention comprend la détermination de ladite quantité et/ou ladite qualité desdits hydrocarbures à partir dudit simulateur comprenant au moins ledit modèle cinétique, ledit modèle cinétique étant appliqué avec lesdits paramètres cinétiques relatifs à ladite roche-mère pour ladite deuxième représentation compositionnelle.

Selon une première variante de l'invention, ladite première représentation compositionnelle peut comprendre une seule classe de composés chimiques résultant de la maturation thermique de ladite matière organique de ladite roche-mère.

Selon une deuxième variante de l'invention, ladite première représentation compositionnelle peut comprendre au moins deux classes de composés chimiques résultant de la maturation thermique de ladite matière organique de ladite roche-mère.

Selon une première mise en oeuvre de l'invention, l'étape A peut comprendre au moins les étapes suivantes :

a) on définit une première séquence de températures permettant un taux de transformation de 100% de ladite roche de référence, ladite première séquence de températures étant une fonction de la température en fonction du temps ;

b) à partir dudit modèle cinétique appliqué avec lesdits paramètres cinétiques de ladite roche de référence et appliqué selon ladite première séquence de températures, on détermine une évolution en fonction du temps du taux de transformation de ladite roche de référence ; on en déduit une première loi de correspondance entre taux transformation de ladite roche de référence et le temps de ladite première séquence de températures ;

c) pour chacune desdites roches-mères de référence, à partir dudit modèle cinétique appliqué avec lesdits paramètres cinétiques relatifs à ladite roche mère de référence et appliqué selon ladite première séquence de températures, et à partir de ladite première loi de correspondance, on détermine (une courbe représentative de l'évolution en fonction du temps du taux de transformation de ladite roche-mère de référence et) une évolution en fonction du temps de la proportion de chacun des composés desdites classes de composés pour ladite roche-mère de référence ; et on en déduit, pour chacun desdits composés desdites classes de composés, une évolution en fonction du temps de la proportion de chacun desdits composés représentative de chacune desdites roches-mères de référence.

d) pour chacun desdits composés desdites classes de composés, on détermine ladite référence compositionnelle pour ladite deuxième représentation compositionnelle à partir de ladite évolution en fonction du temps de la proportion de chacun desdits composés représentative de chacune desdites roches-mères de référence et de ladite première loi de correspondance, ladite référence compositionnelle comprenant une courbe de proportion de référence pour chacun des composés de ladite deuxième représentation compositionnelle en fonction du taux de transformation de ladite roche de référence.

Selon une mise en œuvre de l'invention, l'étape B peut comprendre au moins les étapes suivantes :

e) on définit une deuxième séquence de températures, ladite deuxième séquence de températures étant une fonction de la température en fonction du temps ;

f) à partir dudit modèle cinétique appliqué avec lesdits paramètres cinétiques relatifs à ladite roche de référence et appliqué selon ladite deuxième séquence de températures, on détermine une évolution en fonction du temps du taux de transformation de ladite roche de référence et on détermine une deuxième loi de correspondance entre le taux transformation de ladite roche de référence et le temps de ladite deuxième séquence de températures ;

g) à partir des paramètres cinétiques relatifs à ladite roche-mère pour ladite première représentation compositionnelle, on définit une pluralité de réactions unitaires ; pour chacune desdites réactions unitaires de ladite roche mère, à partir dudit modèle cinétique appliqué avec lesdits paramètres cinétiques relatifs à ladite roche-mère dudit bassin et relatifs à ladite première représentation compositionnelle, ledit modèle cinétique étant appliqué avec ladite deuxième séquence de températures, on détermine une courbe représentative de l'évolution du taux de transformation de ladite roche-mère dudit bassin en fonction du temps pour ladite réaction unitaire ; et on en déduit, pour chacune desdites réactions unitaires, une courbe représentative d'une évolution du taux de transformation de ladite roche-mère dudit bassin pour ladite réaction unitaire en fonction du taux de transformation de ladite roche de référence à partir de ladite deuxième loi de correspondance ;

h) pour chacune desdites réactions unitaires et pour chacun desdits composés desdites classes de composés de ladite deuxième représentation compositionnelle, on détermine une proportion dudit composé pour ladite réaction unitaire à partir de ladite courbe représentative d'une évolution de la proportion de référence dudit composé en fonction du taux de transformation de ladite roche de référence pour ladite réaction unitaire et d'une dérivée de ladite courbe représentative d'une évolution du taux de transformation de ladite roche-mère pour ladite réaction unitaire en fonction du taux de transformation de ladite roche de référence ;

i) on détermine lesdits paramètres cinétiques relatifs à ladite roche-mère et relatifs à ladite deuxième représentation à partir au moins desdites proportions desdits composés desdites classes de composés de ladite deuxième représentation compositionnelle pour chacune desdites réactions unitaires.

Selon une mise en œuvre de l'invention, à partir de ladite quantité et/ou ladite qualité desdits hydrocarbures dudit bassin, on peut définir un schéma d'exploitation dudit bassin, et on exploite ledit bassin sédimentaire en fonction de ladite quantification et/ou dudit schéma.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit ci-dessus, lorsque ledit programme est exécuté sur un ordinateur.

## Liste des figures

**[Fig 1]**

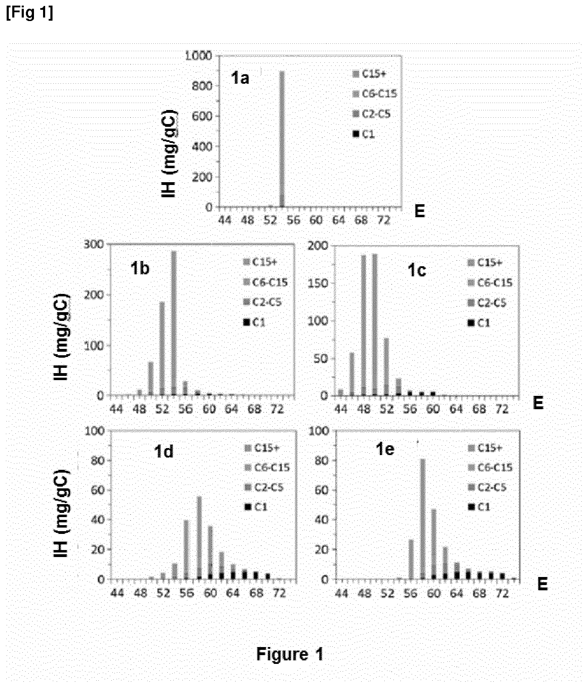

La figure 1 présente des exemples de diagrammes cinétiques, déterminés chacun pour une représentation compositionnelle comprenant 4 classes de composés C1, C2-C5, C6-C15, C15+, et pour 5 types de roches mères différents.
**[Fig 2]**

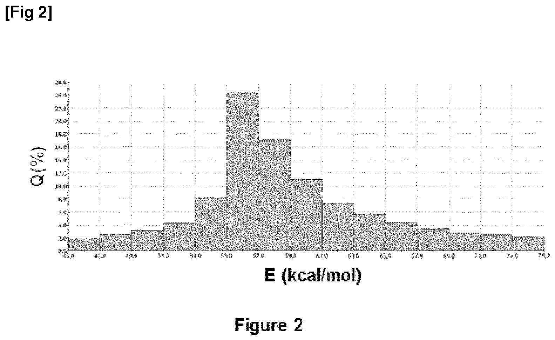

La figure 2 présente, à titre illustratif, un diagramme cinétique établi pour la vitrinite comme roche de référence.
**[Fig 3]**

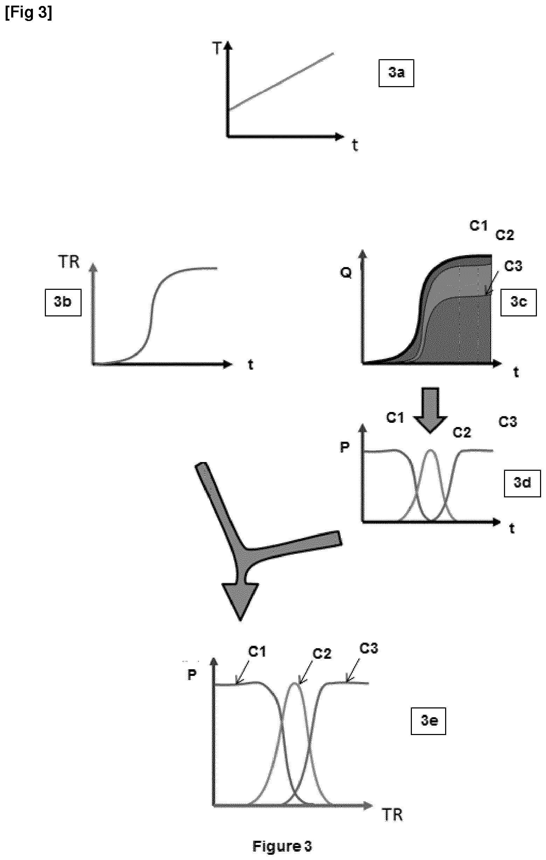

La figure 3 présente de manière schématique le principe de l'étape 1 du procédé selon l'invention.
**[Fig 4]**

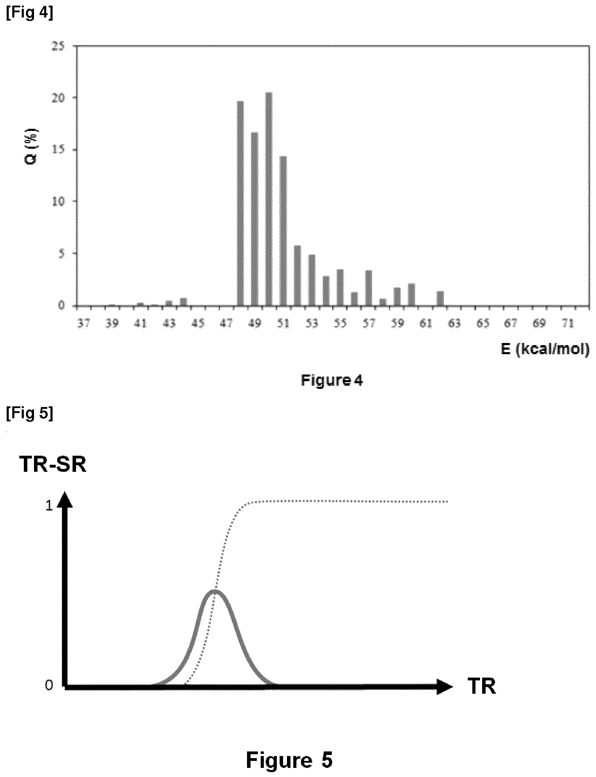

La figure 4 présente, à titre illustratif, un diagramme cinétique établi pour une roche mère d'un bassin dans le cas où la première représentation compositionnelle ne comporte qu'une seule classe de composés chimiques.
**[Fig 5]**
La figure 5 présente un exemple de courbe représentative de l'évolution du taux de transformation de la roche-mère TR-SR pour une réaction unitaire considérée en fonction du taux de transformation de la roche de référence TR, ainsi que la dérivée de cette courbe.

**[Fig 6]**

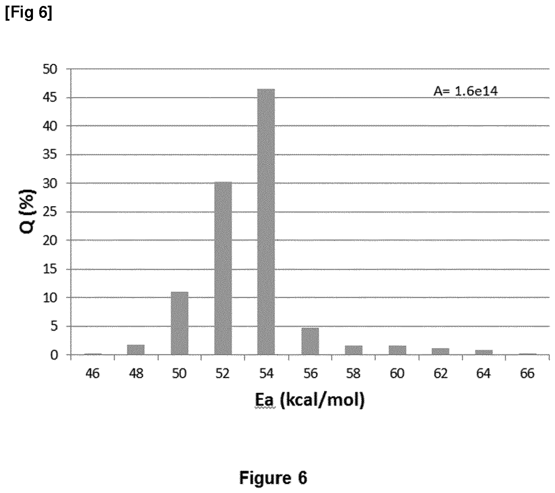

La figure 6 présente un exemple de diagramme cinétique établi pour une roche mère du Bassin de Paris dans le cas où la première représentation compositionnelle ne comporte qu'une seule classe de composés chimiques.

**[Fig 7]**

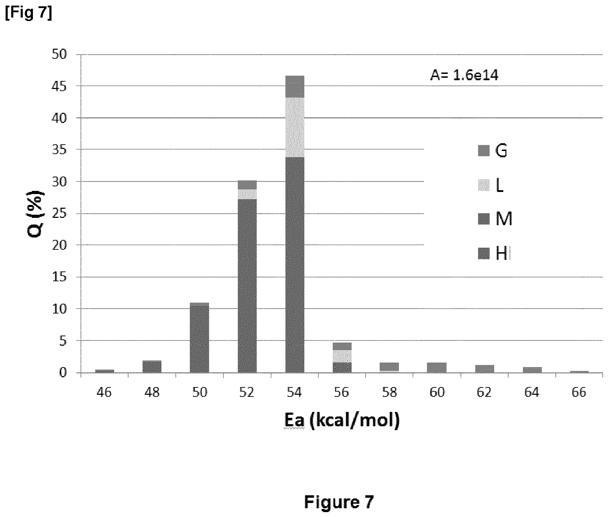

La figure 7 présente un diagramme cinétique résultant de la mise en œuvre du procédé selon l'invention pour la roche mère de la Figure 6, dans le cas où la deuxième représentation compositionnelle comporte quatre classe de composés chimiques.

**Description des modes de réalisation**

La présente invention concerne un procédé pour déterminer la quantité et/ou la qualité des hydrocarbures présents dans un bassin sédimentaire, les hydrocarbures ayant été générés par maturation de la matière organique d'une roche-mère dudit bassin.

La présente invention requiert un modèle cinétique permettant de reproduire la maturation de la matière organique d'une roche-mère. Le modèle cinétique selon l'invention implémente la formule classique de l'avancement d'une réaction chimique, qui est du type :

**[Math 1]**

$$\frac{dx}{dt} = -kc^n \ (1)$$

avec c représentant la quantité de l'espèce chimique considérée, n l'ordre de la réaction, k la constante de vitesse de la réaction et t le temps.

De manière classique, la constante de vitesse de la réaction k est donnée par une loi empirique, la loi d'Arrhenius, qui s'exprime selon une formule du type :

**[Math 2]**

$$k = A.\,exp(-\frac{E}{RT}) \qquad (2)$$

où A est le facteur de fréquence aussi appelé facteur pré-exponentiel, E l'énergie d'activation, R la constante des gaz parfaits et $T$ la température.

La complexité de la transformation du kérogène solide en hydrocarbures est modélisée par un ensemble de réactions d'ordre 1 parallèles. Chacune de ces réactions peut être représentée par une loi cinétique telle que définie par les équations (1) et (2) ci-dessus, et par un facteur de contribution relative à la réaction globale noté Xi. Ainsi, chaque réaction est caractérisée par un triplé (Ai, Ei, Xi) distinct. Le couple (Ai, Ei) définit une vitesse de réaction, et le Xi, la quantité de réactant susceptible d'être utilisée par cette réaction, pouvant être exprimé comme une partie de l'index d'hydrogène, par exemple exprimée en mg/gTOC ou en pourcentage de ce même index, la somme des Xi étant égale à la quantité totale de réactant X. On appelle par la suite, et comme de manière classique "paramètres cinétiques" l'ensemble des triplets (Ai, Ei, Xi) ainsi que la proportion *ni* de chacune des classes de composés à une réaction unitaire de contribution Xi.

De manière classique, l'ensemble des composés chimiques résultant de la transformation de la matière organique sont regroupés en classes de composés chimiques. On appelle par la suite "représentation compositionnelle" une telle répartition en classes de composés. Cette représentation compositionnelle est aussi connue sous le terme "schéma cinétique". On peut par exemple découper l'ensemble des composés résultant de la transformation de la matière organique en classes représentatives par exemple des composés hydrocarbonés C1, C2-C5, C6-C15, C15+ (c'est-à-dire une représentation compositionnelle en 4 classes de composés). La Figure 1 présente des exemples de diagrammes compositionnels déterminés chacun pour une représentation compositionnelle comprenant 4 classes de composés C1, C2-C5, C6-C15, C15+, pour 5 types de roches mères différents (avec 1a : type I, 1b : type II, 1c : type II-S, 1d : type III, 1e : type III North Sea ; et où IH représente l'indice d'hydrogène). Chacune des barres de ces diagrammes représentent la quantité totale (Xi) de composés libérés pour une énergie d'activation Ei donnée, et chaque barre d'un diagramme est elle-même subdivisée en sous-éléments représentant la proportion (ni) de chacune des classes de composés libérés pour cette énergie d'activation Ei.

A noter qu'une représentation compositionnelle au sens de l'invention peut ne comprendre qu'une seule et unique classe de composés. A noter toutefois que dans ce cas, ce type de représentation est dite non compositionnelle dans le langage du spécialiste.

On appelle également par la suite "taux de transformation", que l'on note TR, un taux représentatif de l'évolution de la réaction de transformation de la matière organique à un temps donné. Selon une mise en œuvre de l'invention, ce taux de transformation peut être défini par une formule du type :

**[Math 3]**

$$TR = \frac{m}{m0} \qquad (3)$$

dans lequel, m est la masse de réactant à un instant t et m0 la masse initiale de réactant. Une valeur de TR égale à 0% exprime le fait que la matière organique sédimentaire préservé (le kérogène) n'a pas encore subit de transformation, ce qui se produit lorsque les conditions de temps et de température ne sont pas remplies pour que les réactions soient significatives; on dit alors que la roche mère est immature. A l'inverse, lorsque tout le kérogène d'une roche mère a été transformé, TR vaut 100%, et les réactions s'arrêtent faute de réactant.

Selon une autre mise en œuvre de l'invention, le taux de transformation peut également être s'exprimer en fonction de l'indice d'hydrogène, noté IH, selon la même forme :

**[Math 4]**

$$TR = \frac{IH}{IH0} \qquad (4)$$

dans lequel, IH est l'indice d'hydrogène du réactant à un instant t et IH0 est l'indice d'hydrogène initial du réactant. De manière générale, l'indice d'hydrogène correspond à la teneur en hydrogène de la matière organique de l'échantillon. Selon une mise en œuvre de l'invention, l'indice d'hydrogène peut être obtenu selon une formule du type :

**[Math 5]**

$$IH = \frac{S2.100}{TOC} \qquad (5)$$

où S2 correspond à une quantité de composés hydrocarbonés qui ont été craqués pendant la chauffe en atmosphère inerte de l'échantillon (ce qui ne comprend donc pas les composés hydrocarbonés présents sous forme libre dans la roche mère), et TOC correspond à la teneur en carbone organique total. Ainsi, pour une même roche mère, les paramètres IH et S2 diminuent en fonction de la maturité thermique de la matière organique et cette maturité est déterminée par la température où le pic S2 atteint un maximum ($T_{max}$). Selon une mise en œuvre de l'invention, cet indice d'hydrogène peut être déterminé à partir au moins de la quantité de composés hydrocarbonés et de CO et CO2 mesurées au cours d'une séquence de chauffe en atmosphère inerte et des quantités de CO et $CO_2$ mesurées pendant un séquence de chauffe en atmosphère oxydante, ces mesures étant réalisées par exemple au moyen du dispositif ROCK-EVAL® (IFP Energies nouvelles, France).

De manière générale, le procédé selon l'invention vise à déterminer, pour une roche-mère d'un bassin sédimentaire, les paramètres cinétiques relatifs à une représentation compositionnelle donnée, à partir de paramètres cinétiques relatifs à une autre représentation compositionnelle, sans avoir à réaliser de mesures supplémentaires. Par la suite, la représentation compositionnelle pour laquelle on bénéficie déjà de paramètres cinétiques est appelée "première représentation compositionnelle" et la représentation compositionnelle pour laquelle on cherche à déterminer des paramètres cinétiques est appelée "deuxième représentation compositionnelle". Selon une mise en œuvre de l'invention, la première représentation compositionnelle peut comprendre une unique classe de composés chimiques.

La présente invention repose principalement sur deux aspects :

- l'établissement d'une référence compositionnelle (cf. étape 1 ci-dessous) pour la deuxième représentation compositionnelle, déterminée à partir de paramètres cinétiques établis pour au moins une roche mère, mais de préférence pour une pluralité de roches mères dites "roches mères de référence", et pour la deuxième représentation compositionnelle. La référence compositionnelle selon l'invention peut être vue comme une répartition "moyenne" des composés chimiques libérés lors de la transformation de la matière organique en général, établie à partir de l'ensemble des roches mères de référence considérées et pour la deuxième représentation compositionnelle. Ainsi, on détermine la référence compositionnelle selon l'invention à partir des résultats de mesures en laboratoire compositionnelles pour au moins une roche mère, et de préférence pour une pluralité de roches-mères, de préférence représentatives de la variété des roches-mères présentes dans les bassins sédimentaires (en particulier représentatives des roches mères de type I, II, IIS, et III). La présente invention peut être mise en œuvre à partir de paramètres cinétiques relatifs à une seule roche-mère de référence, mais la référence compositionnelle selon l'invention sera d'autant plus fiable que le nombre de roches-mères de référence considéré est grand. De plus, il est particulièrement avantageux que les roches mères de référence couvrent un large spectre énergétique . De manière préférée, le nombre de roches-mères de référence vaut 4 (pour les quatre types principaux de matière organique) et de manière très préférée, le nombre de roches-mères de référence vaut 10. La référence compositionnelle est qui plus est exprimée en fonction d'une cinétique de référence tel que décrit ci-après.

- l'utilisation d'une cinétique de référence, établie pour une roche de référence telle que la vitrinite, pour s'affranchir de l'infinité de combinaisons de couples (température, temps) donnant un même avancement de réaction. En effet, pour une quantité de produit donnée, la composition générée est fonction de l'énergie reçue par le système. Cette énergie est directement traduite par l'avancement de la réaction (obtenue en combinant la loi d'Arrhenius et la loi de vitesse de réaction) et est fonction de la température T et du temps t. Il existe en ainsi une infinité de couple (T, t) donnant un même avancement de réaction. Cela signifie qu'une forte température et un temps court, peuvent être équivalents pour l'avancement d'une réaction à une faible température pendant une très longue période.

Le procédé selon l'invention comprend au moins les étapes suivantes :

> **1) Détermination d'une référence compositionnelle pour la deuxième représentation compositionnelle**
> **2) Conversion des paramètres cinétiques d'une première représentation compositionnelle en des paramètres cinétiques d'une deuxième représentation compositionnelle**
> **3) Détermination de la quantité et/ou de la qualité des hydrocarbures**
> **4) Exploitation des hydrocarbures de la formation**

Les étapes du procédé selon l'invention sont décrites ci-après dans le cas d'une pluralité de roches mères de référence, mais il peut tout aussi bien être appliqué pour un seule roche mère de référence.

## 1) Détermination d'une référence compositionnelle pour la deuxième représentation compositionnelle

Au cours de cette étape, on détermine une référence compositionnelle pour la deuxième représentation compositionnelle, sous la forme d'une évolution de la proportion de chacun des composés chimiques de la deuxième représentation compositionnelle en fonction d'un taux de transformation d'une roche de référence.

Cette étape est mise en œuvre à partir de :

- paramètres cinétiques relatifs à une au moins une roche mère de référence, ces paramètres ayant été préalablement déterminés pour la deuxième représentation compositionnelle. De manière très préférée, le procédé selon l'invention est mis en œuvre à partir des paramètres cinétiques d'une pluralité de roches-mères, de préférence au moins 4 roches-mères, et de manière très préférée 10 roches-mères. En outre, de manière très préférée, ces roches-mères proviennent de différents types de roches-mères (par exemple selon le classement classique en type I, type II, type II-S, type III), ou encore selon le classement en organofacies décrit dans le document (Pepper et Corvi, 1995).
- paramètres cinétiques relatifs à une roche de référence, ces paramètres ayant été préalablement déterminés par une analyse non compositionnelle. Ces paramètres peuvent avoir été déterminés au cours d'une étape préalable du procédé selon l'invention, ou bien provenir de toute base de données bien connue du spécialiste. Selon l'invention, la roche de référence est une roche pour laquelle sa transformation chimique survient à des échelles de temps et de températures du même ordre de grandeur que celles caractéristiques de la transformation de la matière organique dans les bassins sédimentaires (soit à titre d'exemple dans une gamme de températures entre 80°C et 130°C et une gamme de temps entre 10 et 100 Ma, avec "Ma" correspondant à "Millions d'années").

Selon une mise en œuvre de l'invention, la roche de référence peut être la vitrinite. La vitrinite présente l'avantage que la loi cinétique qui lui est attachée est bien connue, et est qui plus est le plus souvent mesurée lors de la campagne exploratoire d'un bassin sédimentaire. Un exemple d'un diagramme cinétique associé à la vitrinite comme roche de référence est donné en Figure 2. On observe sur ce diagramme la quantité Q (en %) de composés libérés en fonction d'une énergie d'activation E.

Selon une mise en œuvre de l'invention, on applique l'étape 1) selon les sous-étapes suivantes :

### 1.1 Définition d'une première séquence de températures

Selon cette mise en œuvre de l'invention, on définit une première séquence de températures, comme une fonction de la température en fonction du temps. La courbe référencée "3a" dans la Figure 3 illustre de manière schématique une telle séquence de la température T en fonction du temps t.

Selon une mise en œuvre de 'l'invention, cette première séquence est une séquence classiquement définie dans le cas d'expériences menées en laboratoire comme par exemple avec le dispositif ROCK-EVAL® (IFP Energies nouvelles, France).

Selon l'invention, il est important que la séquence choisie permette une transformation à 100% de la roche de référence. L'homme du métier a parfaite connaissance de moyens pour définir une telle séquence assurant la transformation à 100% de la roche de référence. Notamment dans le cas d'une séquence de temps à l'échelle du laboratoire, il suffit d'allonger la durée classique de mesure (par exemple d'une heure), et/ou d'augmenter la température finale de la séquence (par exemple de 100°C). Selon une mise en œuvre de l'invention selon laquelle la roche de référence est la vitrinite, on pourra utiliser la séquence de températures suivante : on part d'une température T1=200°C et on augmente la température jusqu'à une tempéraure T2=800°C selon un gradient de 5°C/min.

La séquence de températures ainsi définie est ensuite utilisée pour l'ensemble des sous-étapes de l'étape 1 d'établissement d'une référence compositionnelle.

### 1.2 Détermination d'une première loi de correspondance

Au cours de cette sous-étape, on détermine une première loi de correspondance entre taux transformation de la roche de référence et le temps de la première séquence de températures.

Selon une mise en œuvre de l'invention, on applique le modèle cinétique selon l'invention avec les paramètres cinétiques de la roche de référence choisie et selon la première séquence de températures. On détermine ainsi une courbe représentative de l'évolution en fonction du temps du taux de transformation de la roche de référence. La courbe référencée "3b" dans la Figure 3 illustre de manière schématique une courbe représentative de l'évolution en fonction du temps t du taux de transformation TR de la roche de référence. Puis on en déduit une première loi de correspondance entre taux transformation de la roche de référence et le temps de ladite première séquence de températures. Cette déduction est immédiate puisqu'il s'agit de la fonction inverse de la courbe représentative de l'évolution en fonction du temps du taux de transformation de la roche de référence.

### 1.3 Détermination d'une évolution de la proportion de chacun des composés pour les roches-mères de référence

Au cours de cette sous-étape, pour chacun des composés des classes de composés de la deuxième représentation compositionnelle, on détermine une courbe représentative de l'évolution en fonction du temps de la proportion de ce composé, cette courbe étant représentative de l'ensemble des roches-mères de référence.

Selon une mise en œuvre de l'invention, on détermine dans un premier temps, pour chaque roche-mère de référence, une évolution en fonction du temps de la quantité de chacun des composés de la deuxième représentation compositionnelle, au moyen du modèle cinétique appliqué avec les paramètres cinétiques relatifs à la roche mère de référence considérée, le modèle cinétique étant appliqué selon la première séquence de températures. Le schéma référencé "3c" dans la Figure 3 présente de manière purement illustrative l'évolution de la composition simulée Q en fonction du temps t pour trois classes de composés c1, c2, c3.

Puis à partir de cette simulation de l'évolution des quantités de chacun des composés libérés pour une roche-mère donnée, on détermine une évolution en fonction du temps de la proportion de chacun de ces composés, et ce pour chacune des roches-mères de référence. Le schéma "3d" dans la Figure 3 présente de manière purement illustrative l'évolution de la proportion P des trois classes de composés c1, c2, c3 en fonction du temps. Ces courbes peuvent être vues comme des compositions instantanées normalisées.

Puis à partir de l'ensemble des courbes de proportions de composés déterminées pour l'ensemble des roches-mères de référence, on détermine une courbe de proportions représentative de l'ensemble de ces courbes de proportions déterminées pour l'ensemble des roches-mères de référence, et ce, pour chaque composé.

Pour ce faire, selon une mise en œuvre de l'invention, pour chaque composé de la deuxième représentation compositionnelle, on réalise une moyenne des proportions de ce composé obtenues pour chacune des roches-mères de référence, et ce, pour chaque instant t. Alternativement, on utilise une modale au lieu d'une moyenne, c'est-à-dire que l'on retient la valeur présentant la plus grande occurrence.

Par la suite, mais uniquement à des fins de simplification de l'exposé, on parle de courbes de proportions "moyennes", dans le sens où ces courbes sont représentatives d'un ensemble de courbes relatives à un ensemble de roches-mères de référence.

### 1.4 Détermination d'une référence compositionnelle pour la deuxième représentation compositionnelle

Au cours de cette sous-étape, on détermine une référence compositionnelle pour la deuxième représentation compositionnelle.

Selon une mise en œuvre de l'invention, à partir des courbes représentatives de l'évolution en fonction du temps de la proportion de chacun des composés pour la pluralité de roches-mères de référence et à partir de la première loi de correspondance, on détermine une courbe représentative de l'évolution de la proportion de chacun des composés en fonction du taux de transformation de la roche de référence. La courbe référencée "3e " dans la Figure 3 illustre de manière schématique l'évolution de la proportion P des trois classes de composés c1, c2, c3 en fonction du taux de transformation TR de la roche de référence.

Le spécialiste sait comment mettre en œuvre une telle étape puisqu'il s'agit de réaliser un simple changement de variable dans le sens où les courbes de proportions de composés exprimées en temps sont simplement converties en courbes de proportions de composés exprimées en taux de transformation, au moyen de la première loi de correspondance temps-taux de transformation établie à la sous-étape 1.2 décrite ci-dessus.

Cette étape permet d'obtenir des courbes "moyennes" d'évolution de proportions de composés chimiques libérés par la matière organique d'une grande variété de roches mères, ces courbes étant exprimées dans une échelle invariable, relative à une roche de référence pour les spécialistes.

On appelle par la suite "référence compositionnelle" l'ensemble de ces courbes de proportions établies en tenant compte de l'ensemble des courbes de proportions obtenues pour chacune des roches mères de référence.

### 2) Conversion des paramètres cinétiques d'une première représentation compositionnelle en des paramètres cinétiques d'une deuxième représentation compositionnelle

La deuxième étape vise à convertir des paramètres cinétiques relatifs à la roche-mère étudiée, établis selon une première représentation compositionnelle, en des paramètres cinétiques relatifs à une deuxième représentation compositionnelle, et ce, à partir de la référence compositionnelle déterminée pour la deuxième représentation compositionnelle tel que décrit à l'étape 1.

Ainsi, il peut s'agir de convertir des paramètres cinétiques existants, qui ont été préalablement déterminés pour une représentation compositionnelle donnée (dite "première représentation compositionnelle"), en des paramètres cinétiques selon une nouvelle représentation compositionnelle (dite "deuxième représentation compositionnelle"), répondant aux besoins opérationnels actuels. La Figure 4 présente, à titre illustratif, un diagramme cinétique établi pour une roche mère d'un bassin dans le cas où la première représentation compositionnelle ne comporte qu'une seule classe de composés chimiques. Chaque barre de cet histogramme représente la quantité Q totale de composés libérés pour une énergie d'activation E donnée, mais ne donne pas les proportions de chacun de ces composés pour cette énergie d'activation.

Selon une mise en œuvre de l'invention, on applique l'étape 2) selon les sous-étapes suivantes :

**2.1 Définition d'une deuxième séquence de températures**

Selon cette mise en œuvre de l'invention, on définit une deuxième séquence de températures, comme une fonction de la température en fonction du temps.

De manière générale, le procédé selon l'invention ne requiert pas que les séquences de températures soient différentes entre l'étape 1 et 2. De manière générale, on distingue deux séquences de températures car la première étape peut être mise en œuvre de manière totalement indépendante de la deuxième étape. Toutefois, selon une mise en œuvre de l'invention, la deuxième séquence de températures peut être identique à la première séquence de températures définies pour la mise en œuvre de l'étape 1.

Selon une mise en œuvre de l'invention, cette deuxième séquence est une séquence classiquement définie dans le cas d'expériences menées en laboratoire comme par exemple avec le dispositif ROCK-EVAL® (IFP Energies nouvelles, France).

Selon cette mise en œuvre de l'invention, il est important que la séquence choisie permette une transformation à 100% de la roche de référence. L'homme du métier a parfaite connaissance de moyens pour définir une telle séquence assurant la transformation à 100% de la roche de référence. Notamment dans le cas d'une séquence de temps à l'échelle du laboratoire, il suffit d'allonger la durée classique de mesure (par exemple d'une heure), et/ou d'augmenter la température finale de la séquence (par exemple de 100°C). Selon une mise en œuvre de l'invention selon laquelle la roche de référence est la vitrinite, on pourra utiliser la séquence de températures suivante : on part d'une température T1=200°C et on augmente la température jusqu'à une température T2=800°C selon un gradient 5°C/min.

La séquence de températures ainsi définie est ensuite utilisée pour l'ensemble des sous-étapes de l'étape 2 d'établissement d'une référence compositionnelle.

**2.2 Détermination d'une deuxième loi de correspondance**

Au cours de cette sous-étape, on détermine une deuxième loi de correspondance entre taux transformation de la roche de référence et le temps de la deuxième séquence de températures. Cette étape est optionnelle lorsque la deuxième séquence de températures est identique à la première séquence de températures. En effet, dans ce cas, la première loi de correspondance peut être utilisée en tant que deuxième loi de correspondance pour la mise en œuvre de l'étape 2.

Selon une mise en œuvre de l'invention selon laquelle la deuxième séquence de températures est distincte de la première séquence de températures, on applique le modèle cinétique selon l'invention avec les paramètres cinétiques de la roche de référence choisie, ce modèle cinétique étant appliqué selon la deuxième séquence de températures. On détermine ainsi une courbe représentative de l'évolution en fonction du temps du taux de transformation de la roche de référence pour la deuxième séquence de températures.

Puis on en déduit une deuxième loi de correspondance entre taux transformation de la roche de référence et le temps de la deuxième séquence de températures. Cette déduction est immédiate puisqu'il s'agit de la fonction inverse de la courbe représentative de l'évolution en fonction du temps du taux de transformation de la roche de référence.

**2.3 Détermination de l'évolution du taux de transformation de la roche mère pour chaque réaction unitaire en fonction du taux de transformation de la roche de référence**

Cette sous-étape est mise en œuvre à partir des paramètres cinétiques relatifs à la roche-mère étudiée et qui ont été établis pour une première représentation compositionnelle.

A partir de ces paramètres cinétiques, on définit un ensemble de réactions unitaires. Selon une mise en œuvre de l'invention, une réaction unitaire peut correspondre à un couple $(A_i, E_i)$ donné (cf. équations (1) et (2) ci-dessus).

Puis, pour chaque réaction unitaire, au moyen du modèle cinétique appliqué avec les paramètres cinétiques relatifs à cette réaction unitaire et appliqué selon la deuxième séquence de températures, on détermine une évolution de son taux de transformation de la roche-mère du bassin en fonction du temps.

Puis, pour chacune réaction unitaire, et à partir de la deuxième loi de correspondance déterminée à la sous-étape 2.2, on détermine une courbe représentative de l'évolution du taux de transformation de la roche-mère pour la réaction unitaire considérée en fonction du taux de transformation de la roche de référence. Autrement dit de manière plus simple, on réalise ici un changement de variable, puisqu'au lieu que le taux de transformation soit exprimé en fonction du temps, on l'exprime en fonction d'un taux de transformation d'une roche de référence, via la deuxième loi de correspondance. Un exemple d'une telle courbe est présenté par la courbe en trait pointillé en Figure 5. Cette courbe représente l'avancement de la réaction (unitaire) TR-SR en fonction de l'avancement de la cinétique de référence TR, soit la masse cumulée produite.

Puis, pour chaque réaction unitaire, on détermine une dérivée de cette courbe représentative de l'évolution du taux de transformation de la roche-mère pour la réaction unitaire considérée en fonction du taux de transformation de la roche de référence. Un exemple d'une telle courbe est présenté par la courbe en trait plein en Figure 5. Cette courbe représente la répartition des masses produites en fonction de l'avancement de la cinétique de référence.

### 2.4 Détermination de la proportion de composés par réaction unitaire et détermination des paramètres cinétiques pour la deuxième représentation compositionnelle par la courbe en trait plein

Cette sous-étape est appliquée pour chacune des réactions unitaires définies à la sous-étape précédente, et pour chacun des composés des classes de composés de la deuxième représentation compositionnelle.

Plus précisément, pour chacune des réactions unitaires et pour chacun des composés des classes de composés de la deuxième représentation compositionnelle, on détermine une proportion du composé considéré pour la réaction unitaire considérée, à partir de la référence compositionnelle déterminée à l'issue de l'étape 1 pour la deuxième représentation compositionnelle et de la dérivée de la courbe représentative de l'évolution du taux de transformation de la roche-mère déterminée à la sous-étape précédente pour la réaction unitaire considérée.

Selon une mise en œuvre de l'invention, on met en œuvre cette sous-étape en réalisant une intégrale de la courbe de proportion déterminée à l'issue de l'étape 1 pour le composé considéré, pondérée par la dérivée déterminée à la sous-étape précédente, l'intégration se faisant sur le taux de transformation de la roche de référence. On obtient de cette manière la masse du composé considéré, pour la réaction considérée.

En répétant cette opération pour l'ensemble des réactions unitaires (c'est-à-dire pour différentes valeurs ou intervalles d'énergie d'activation Ei), et pour chaque composé ou chaque classe de composés de la deuxième représentation compositionnelle, on obtient de cette manière l'ensemble des paramètres cinétiques relatifs à la deuxième représentation compositionnelle.

### 3) Détermination de la quantité et/ou de la qualité des hydrocarbures

A l'issue de l'étape précédente, on obtient un ensemble de paramètres cinétiques relatifs à la roche mère du bassin étudié, pour la deuxième représentation compositionnelle qui est la représentation compositionnelle d'intérêt pour évaluer le potentiel pétrolier du bassin étudié. On est alors à même d'utiliser un modèle cinétique, alimenté par ces paramètres cinétiques, pour évaluer le potentiel pétrolier du bassin étudié.

Plus précisément, au cours de cette étape, on détermine la quantité et/ou la qualité des hydrocarbures présents dans le bassin sédimentaire étudié, à partir des paramètres cinétiques déterminés à l'issue de l'étape précédente et du modèle cinétique tel que décrit par les équations (1) et (2) ci-dessus, alimenté par ces paramètres cinétiques.

Selon l'invention, le modèle cinétique selon l'invention est intégré à une simulation numérique de bassin exécutée sur ordinateur. De manière classique, un simulateur de bassin permet de reconstituer des processus géologiques et/ou géochimiques ayant affecté le bassin depuis un temps géologique t jusqu'au temps actuel. De manière classique, la période sur laquelle on reconstitue l'histoire de ce bassin est discrétisée en événements géologiques, aussi appelés états. Ainsi, deux états sont séparés par un événement géologique (correspondant par exemple à un dépôt sédimentaire particulier et pouvant s'étaler entre une centaine d'années et quelques millions d'années). Un simulateur de bassin repose sur une représentation maillée du bassin, aussi appelée « modèle de bassin », et le simulateur de bassin permet de déterminer un tel modèle pour chaque état. Ainsi, un simulateur de bassin permet de calculer des grandeurs physiques relatives au bassin étudié en chaque maille de la représentation maillée associée à chaque état. Parmi les grandeurs physiques estimées par un simulateur de bassin, on trouve généralement la température, la pression, la porosité et la masse volumique de la roche contenue dans la maille considérée, les vitesses d'eau, et le TOC (ou concentration de la roche en matière organique). De manière classique, un simulateur de bassin permet, en outre, de calculer la quantité et la composition des hydrocarbures d'origine thermogénique, au moyen d'un modèle cinétique qui est alimenté par des paramètres cinétiques. Ainsi, la simulation de bassin consiste en la résolution d'un système d'équations différentielles décrivant l'évolution au cours du temps des grandeurs physiques étudiées. Pour ce faire, on peut par exemple utiliser une discrétisation par la méthode des volumes finis, comme décrit par exemple dans (Scheichl et al., 2003). Pour chaque état, il est nécessaire de résoudre les équations par petits incréments de temps (i.e. avec un petit pas de temps $dt$) jusqu'à l'état suivant. Conformément au principe des méthodes de volumes finis centrés sur les mailles, les inconnues sont discrétisées par une valeur constante par maille et les équations de conservation (masse ou chaleur) sont intégrées en espace sur chaque maille et en temps entre deux pas de temps successifs. Les équations discrètes expriment alors que la quantité conservée dans une maille à un pas de temps donné est égale à la quantité contenue dans la maille au pas de temps précédent, augmentée des flux de quantités entrés dans la maille et réduite des flux de quantités sorties de la maille par ses faces, plus les apports extérieurs. Un exemple d'un tel simulateur de bassin est le logiciel TemisFlow™ (IFP Énergies nouvelles, France).

Selon l'invention, le simulateur de bassin comprend un modèle cinétique tel que décrit ci-dessus, et ce modèle cinétique est appliqué au moyen des paramètres cinétiques tels que déterminés à l'issue de l'étape 2 pour la représentation compositionnelle d'intérêt pour le géologue de bassin. Cela permet d'obtenir en chaque maille de la représentation maillée du bassin sédimentaire une estimation de la quantité d'hydrocarbures produits par la transformation de la matière organique présente dans le bassin au cours du temps, mais également, du fait que les paramètres cinétiques utilisés sont relatifs à une représentation compositionnelle, de la composition des hydrocarbures produits au cours du temps, et ce, en chacune des mailles du modèle de bassin. La composition des hydrocarbures produits renseigne le spécialiste sur la qualité des hydrocarbures. Il est en effet bien évident que les hydrocarbures les plus légers sont considérés comme des hydrocarbures de meilleure qualité que des hydrocarbures lourds à très lourds. De telles informations, sur la quantité et la qualité des hydrocarbures, permettent ainsi d'évaluer le potentiel pétrolier d'un bassin sédimentaire.

Ainsi, la présente invention permet de convertir une cinétique existante, non compositionnelle ou compositionnelle, en une cinétique compositionnelle ayant un nombre de classes de composés choisi par l'utilisateur en fonction de ses besoins, et ainsi de prédire le potentiel pétrolier du bassin sans avoir à réaliser des expériences en laboratoire longues et coûteuses.

**4) Exploitation des hydrocarbures du bassin**

A l'issue des précédentes étapes, on dispose au moins de la quantité et/ou la qualité des hydrocarbures présents chacune des mailles du modèle de bassin au temps actuel.

En outre, en fonction du simulateur de bassin utilisé pour mettre en œuvre l'invention, on peut disposer par exemple d'informations sur :

i. la mise en place des couches sédimentaires,
ii. leur compaction sous l'effet du poids des sédiments sus-jacents,
iii. Leur réchauffement au cours de leur enfouissement,
iv. les modifications de pressions de fluides résultant de cet enfouissement,
v. la formation des hydrocarbures formés par thermogénèse,
vi. le déplacement de ces hydrocarbures dans le bassin sous l'effet de la flottabilité, de la capillarité, des différences de gradients de pression les écoulements souterrains,

A partir de telles informations, le spécialiste a alors connaissance des zones dudit bassin, correspondant à des mailles de ladite représentation maillée au temps actuel dudit bassin, comportant des hydrocarbures, ainsi que la teneur, la nature et la pression des hydrocarbures qui y sont piégés. Le spécialiste est alors en mesure de sélectionner les zones du bassin étudié présentant le meilleur potentiel pétrolier.

L'exploitation pétrolière du bassin peut alors prendre plusieurs formes, notamment :

- la réalisation de forages d'exploration dans les différentes zones sélectionnées comme présentant le meilleur potentiel, afin de confirmer ou infirmer le potentiel estimé préalablement, et d'acquérir de nouvelles données pour alimenter de nouvelles études plus précises,

- la réalisation de forages d'exploitation (puits producteurs ou injecteurs) pour la récupération des hydrocarbures présents au sein du bassin sédimentaire dans les zones sélectionnées comme présentant le meilleur potentiel.

**Equipement et produit programme d'ordinateur**

Le procédé selon l'invention est mis en œuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

Les moyens de traitement de données sont configurés pour notamment réaliser l'étape 3 précédente, dans laquelle on détermine la quantité et/ou la qualité des hydrocarbures à partir d'un simulateur numérique de bassin, comprenant au moins un modèle cinétique appliqué avec les paramètres cinétiques déterminés à l'issue de l'étape 2.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit précédemment, lorsque ledit programme est exécuté sur un ordinateur.

**Exemples**

Les caractéristiques et avantages du procédé selon l'invention apparaîtront plus clairement à la lecture de l'exemple d'application ci-après.

Le procédé selon l'invention est appliqué au bassin de Paris (France). Ce bassin est une cuvette sédimentaire de 140 000 km2, 500 km d'Est en Ouest sur 300 du nord au sud, formée de couches sédimentaires concentriques typique des bassins intracratoniques.

Une des principales roches mères à l'origine des hydrocarbures en place est d'âge Toarcien. Elle contient un kérogène de type II (marin), avec un Indice d'Hydrogène initial total (IH0) de l'ordre de 600 mgHC/gR.

Le procédé selon l'invention est mis en œuvre à partir de paramètres cinétiques relatifs à une première représentation compositionnelle, définie par une unique classe de composés chimiques. La Figure 6 présente un diagramme compositionnel relatif à cette première représentation compositionnelle, représentant la quantité Q (en %) de composés libérés en fonction de l'énergie d'activation E.

Le procédé selon l'invention est mis en œuvre pour déterminer les paramètres cinétiques relatifs à une nouvelle représentation compositionnelle adapté aux besoins opérationnels, définie par 4 classes de composés « mobiles » : 1 fraction chimique « gaz » (notée G) (composés à l'état vapeur en condition de surface), et 3 fractions chimiques « huile » de densités variables (H = huile lourde 940 kg/m3, M = huile de densité intermédiaire 860 kg/m3, L = huile légère - condensat 780 kg/m3).

La Figure 7 présente le diagramme compositionnel obtenu au moyen des paramètres cinétiques relatifs à la deuxième représentation compositionnelle déterminés à l'issue du procédé selon l'invention. Ainsi, on obtient la quantité Q (en %) de chacun des composés de la deuxième représentation compositionnelle libérés en fonction de l'énergie d'activation.

Ainsi, le procédé selon l'invention permet de convertir, sans avoir à réaliser des mesures en laboratoire longues et coûteuses, tout schéma cinétique existant en un schéma cinétique compositionnel ayant un nombre de classes de composés chimiques choisi par le spécialiste, en fonction de ses besoins opérationnels.

**Revendications**

1. Procédé mis en œuvre par ordinateur pour déterminer la quantité et/ou la qualité des hydrocarbures présents dans un bassin sédimentaire, lesdits hydrocarbures ayant été générés par maturation de la matière organique d'une roche-mère dudit bassin, au moyen d'un simulateur numérique de bassin comprenant un modèle cinétique, ledit modèle cinétique étant appliqué avec des paramètres cinétiques pour reproduire la transformation de la matière organique en au moins un composé chimique sous l'effet de l'augmentation des températures, à partir de paramètres cinétiques relatifs à ladite roche-mère et relatifs à une première représentation compositionnelle,

**caractérisé en ce qu'**on détermine des paramètres cinétiques relatifs à ladite roche-mère et relatifs à une deuxième représentation compositionnelle en appliquant au moins les étapes suivantes au moyen dudit modèle cinétique, lesdites première et deuxième représentations compositionnelles étant définies par un nombre de classes de composés chimiques différent :

    A) à partir de paramètres cinétiques relatifs à au moins une roche-mère de référence et relatifs à ladite deuxième représentation compositionnelle, et à partir de paramètres cinétiques relatifs à une roche de référence et relatifs à ladite deuxième représentation compositionnelle, on détermine une référence compositionnelle pour ladite deuxième représentation compositionnelle sous la forme d'une évolution d'une proportion de chacun des composés chimiques de ladite deuxième représentation compositionnelle en fonction d'un taux de transformation de ladite roche de référence ;
    B) à partir desdits paramètres cinétiques relatifs à ladite roche-mère et relatifs à ladite première représentation compositionnelle, et à partir de ladite référence compositionnelle déterminée pour ladite deuxième représentation compositionnelle, on détermine des paramètres cinétiques relatifs à ladite roche-mère et relatifs à ladite deuxième représentation compositionnelle ;

et **en ce qu'**on détermine ladite quantité et/ou ladite qualité desdits hydrocarbures à partir dudit simulateur comprenant au moins ledit modèle cinétique, ledit modèle cinétique étant appliqué avec lesdits paramètres cinétiques relatifs à ladite roche-mère pour ladite deuxième représentation compositionnelle.

2. Procédé selon la revendication 1, dans lequel ladite première représentation compositionnelle comprend une seule classe de composés chimiques résultant de la maturation thermique de ladite matière organique de ladite roche-mère.

3. Procédé selon la revendication 1, dans lequel ladite première représentation compositionnelle comprend au moins deux classes de composés chimiques résultant de la maturation thermique de ladite matière organique de ladite roche-mère.

4. Procédé selon l'une des revendications précédentes, dans lequel l'étape A comprend au moins les étapes suivantes :

a) on définit une première séquence de températures permettant un taux de transformation de 100% de ladite roche de référence, ladite première séquence de températures étant une fonction de la température en fonction du temps ;

b) à partir dudit modèle cinétique appliqué avec lesdits paramètres cinétiques de ladite roche de référence et appliqué selon ladite première séquence de températures, on détermine une évolution en fonction du temps du taux de transformation de ladite roche de référence ; on en déduit une première loi de correspondance entre taux transformation de ladite roche de référence et le temps de ladite première séquence de températures ;

c) pour chacune desdites roches-mères de référence, à partir dudit modèle cinétique appliqué avec lesdits paramètres cinétiques relatifs à ladite roche mère de référence et appliqué selon ladite première séquence de températures, et à partir de ladite première loi de correspondance, on détermine (une courbe représentative de l'évolution en fonction du temps du taux de transformation de ladite roche-mère de référence et) une évolution en fonction du temps de la proportion de chacun des composés desdites classes de composés de ladite deuxième représentation compositionnelle pour ladite roche-mère de référence ; et on en déduit, pour chacun desdits composés desdites classes de composés de ladite deuxième représentation compositionnelle, une évolution en fonction du temps de la proportion de chacun desdits composés de ladite deuxième représentation compositionnelle représentative de chacune desdites roches-mères de référence.

d) pour chacun desdits composés desdites classes de composés de ladite deuxième représentation compositionnelle, on détermine ladite référence compositionnelle pour ladite deuxième représentation compositionnelle à partir de ladite évolution en fonction du temps de la proportion de chacun desdits composés représentative de chacune desdites roches-mères de référence et de ladite première loi de correspondance, ladite référence compositionnelle comprenant une courbe de proportion de référence pour chacun des composés de ladite deuxième représentation compositionnelle en fonction du taux de transformation de ladite roche de référence.

5. Procédé selon la revendication 4, dans lequel l'étape B comprend au moins les étapes suivantes :

i) on définit une deuxième séquence de températures, ladite deuxième séquence de températures étant une fonction de la température en fonction du temps ;

ii) à partir dudit modèle cinétique appliqué avec lesdits paramètres cinétiques relatifs à ladite roche de référence et appliqué selon ladite deuxième séquence de températures, on détermine une évolution en fonction du temps du taux de transformation de ladite roche de référence et on détermine une deuxième loi de correspondance entre le taux transformation de ladite roche de référence et le temps de ladite deuxième séquence de températures ;

iii) à partir des paramètres cinétiques relatifs à ladite roche-mère pour ladite première représentation compositionnelle, on définit une pluralité de réactions unitaires ; pour chacune desdites réactions unitaires de ladite roche mère, à partir dudit modèle cinétique appliqué avec lesdits paramètres cinétiques relatifs à ladite roche-mère dudit bassin et relatifs à ladite première représentation compositionnelle, ledit modèle cinétique étant appliqué avec ladite deuxième séquence de températures, on détermine une courbe représentative de l'évolution du taux de transformation de ladite roche-mère dudit bassin en fonction du temps pour ladite réaction unitaire ; et on en déduit, pour chacune desdites réactions unitaires, une courbe représentative d'une évolution du taux de transformation de ladite roche-mère dudit bassin pour ladite réaction unitaire en fonction du taux de transformation de ladite roche de référence à partir de ladite deuxième loi de correspondance ;

iv) pour chacune desdites réactions unitaires et pour chacun desdits composés desdites classes de composés de ladite deuxième représentation compositionnelle, on détermine une proportion dudit composé pour ladite réaction unitaire à partir de ladite courbe représentative d'une évolution de la proportion de référence dudit composé en fonction du taux de transformation de ladite roche de référence pour ladite réaction unitaire et d'une dérivée de ladite courbe représentative d'une évolution du taux de transformation de ladite roche-mère pour ladite réaction unitaire en fonction du taux de transformation de ladite roche de référence ;

on détermine lesdits paramètres cinétiques relatifs à ladite roche-mère et relatifs à ladite deuxième représentation à partir au moins desdites proportions desdits composés desdites classes de composés de ladite deuxième représentation compositionnelle pour chacune desdites réactions unitaires.

6. Procédé selon l'une des revendications précédentes, dans lequel, à partir de ladite quantité et/ou ladite qualité desdits hydrocarbures dudit bassin, on définit un schéma d'exploitation dudit bassin, et on exploite ledit bassin sédimentaire en fonction de ladite quantification et/ou dudit schéma.

7. Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

**Patentansprüche**

1. Computerimplementiertes Verfahren zur Bestimmung der Menge und/oder Qualität der Kohlenwasserstoffe, die in einem Sedimentbecken vorhanden sind, wobei die Kohlenwasserstoffe durch Reifung des organischen Materials eines Muttergesteins des Beckens erzeugt wurden, mittels eines digitalen Beckensimulators, der ein kinetisches Modell umfasst, wobei das kinetische Modell mit kinetischen Parametern angewandt wird, um die Umwandlung des organischen Materials in mindestens eine chemische Verbindung unter der Wirkung der Erhöhung der Temperaturen anhand von kinetischen Parametern in Bezug auf das Muttergestein und in Bezug auf eine erste Zusammensetzungsdarstellung zu reproduzieren,

dadurch gekennzeichnet, dass die kinetischen Parameter in Bezug auf das Muttergestein und in Bezug auf eine zweite Zusammensetzungsdarstellung unter Anwendung wenigstens der folgenden Schritte mittels des kinetischen Modells bestimmt werden, wobei die erste und zweite Zusammensetzungsdarstellung von einer unterschiedlichen Anzahl von Klassen chemischer Verbindungen definiert werden:

A) anhand von kinetischen Parametern in Bezug auf mindestens ein Referenzmuttergestein und in Bezug auf die zweite Zusammensetzungsdarstellung und anhand von kinetischen Parametern in Bezug auf ein Referenzgestein und in Bezug auf die zweite Zusammensetzungsdarstellung wird eine Zusammensetzungsreferenz für die zweite Zusammensetzungsdarstellung in Form einer Entwicklung eines Anteils jeder der chemischen Verbindungen der zweiten Zusammensetzungsdarstellung in Abhängigkeit von einer Umwandlungsrate des Referenzgesteins bestimmt;
B) anhand der kinetischen Parameter in Bezug auf das Muttergestein und in Bezug auf die erste Zusammensetzungsdarstellung und anhand der Zusammensetzungsdarstellung, die für die zweite Zusammensetzungsdarstellung bestimmt wird, werden kinetische Parameter in Bezug auf das Muttergestein und in Bezug auf die zweite Zusammensetzungsdarstellung bestimmt;

und dadurch, dass die Menge und/oder Qualität der Kohlenwasserstoffe anhand des Simulators bestimmt wird, der wenigstens das kinetische Modell umfasst, wobei das kinetische Modell mit den kinetischen Parametern in Bezug auf das Muttergestein für die zweite Zusammensetzungsdarstellung angewandt wird.

2. Verfahren nach Anspruch 1, wobei die erste Zusammensetzungsdarstellung eine einzelne Klasse chemischer Verbindungen umfasst, die aus der thermischen Reifung des organischen Materials des Muttergesteins hervorgehen.

3. Verfahren nach Anspruch 1, wobei die erste Zusammensetzungsdarstellung mindestens zwei Klassen chemischer Verbindungen umfasst, die aus der thermischen Reifung des organischen Materials des Muttergesteins hervorgehen.

4. Verfahren nach einem der vorhergehenden Ansprüche, wobei der Schritt A wenigstens die folgenden Schritte umfasst:

a) es wird eine erste Sequenz von Temperaturen festgelegt, die eine Umwandlungsrate von 100 % des Referenzgesteins gestatten, wobei die erste Sequenz von Temperaturen eine Funktion der Temperatur in Abhängigkeit von der Zeit ist;
b) anhand des kinetischen Modells, das mit den kinetischen Parametern des Muttergesteins angewandt wird und gemäß der ersten Sequenz von Temperaturen angewandt wird, wird eine zeitabhängige Entwicklung der Umwandlungsrate des Referenzgesteins bestimmt; daraus wird ein erstes Gesetz einer Entsprechung zwischen Umwandlungsrate des Referenzgesteins und der Zeit der ersten Sequenz von Temperaturen abgeleitet;
c) für jedes der Referenzmuttergesteine wird anhand des kinetischen Modells, das mit den kinetischen Parametern in Bezug auf das Referenzmuttergestein angewandt wird und gemäß der ersten Sequenz von Temperaturen angewandt wird, und anhand des ersten Entsprechungsgesetzes (eine Kurve, die für die zeitabhängige Entwicklung der Umwandlungsrate des Referenzmuttergesteins repräsentativ ist, und) eine zeitabhängige Entwicklung des Anteils jeder der Verbindungen der Klassen von Verbindungen der zweiten Zusammensetzungsdarstellung für das Referenzmuttergestein bestimmt; und daraus wird für jede der Verbindungen der Klassen von Verbindungen der zweiten Zusammensetzungsdarstellung eine zeitabhängige Entwicklung des Anteils jeder der Verbindungen der zweiten Zusammensetzungsdarstellung abgeleitet, die für jedes der Referenzmuttergesteine repräsentativ ist.

d) für jede der Verbindungen der Klassen von Verbindungen der zweiten Zusammensetzungsdarstellung wird die Zusammensetzungsreferenz für die zweite Zusammensetzungsdarstellung anhand der zeitabhängigen Entwicklung des Anteils jeder der Verbindungen, die für jedes der Referenzmuttergesteine repräsentativ ist, und des ersten Entsprechungsgesetzes bestimmt, wobei die Zusammensetzungsreferenz eine Referenzanteilskurve für jede der Verbindungen der zweiten Zusammensetzungsdarstellung in Abhängigkeit von der Umwandlungsrate des Referenzgesteins umfasst.

**5.** Verfahren nach Anspruch 4, wobei der Schritt B wenigstens die folgenden Schritte umfasst:

i) es wird eine zweite Sequenz von Temperaturen festgelegt, wobei die zweite Sequenz von Temperaturen eine Funktion der Temperatur in Abhängigkeit von der Zeit ist;

ii) anhand des kinetischen Modells, das mit den kinetischen Parametern in Bezug auf das Muttergestein angewandt wird und gemäß der zweiten Sequenz von Temperaturen angewandt wird, wird eine zeitabhängige Entwicklung der Umwandlungsrate des Referenzgesteins bestimmt, und es wird ein zweites Gesetz einer Entsprechung zwischen der Umwandlungsrate des Referenzgesteins und der Zeit der zweiten Sequenz von Temperaturen bestimmt;

iii) anhand der kinetischen Parameter in Bezug auf das Muttergestein für die erste Zusammensetzungsdarstellung wird eine Mehrzahl von einheitlichen Reaktionen festgelegt; für jede der einheitlichen Reaktionen des Muttergesteins wird anhand des kinetischen Modells, das mit den kinetischen Parametern in Bezug auf das Muttergestein des Beckens und in Bezug auf die erste Zusammensetzungsdarstellung angewandt wird, wobei das kinetische Modell mit der zweiten Sequenz von Temperaturen angewandt wird, eine Kurve, die für die Entwicklung der Umwandlungsrate des Muttergesteins des Beckens in Abhängigkeit von der Zeit repräsentativ ist, für die einheitliche Reaktion bestimmt; und daraus wird für jede der einheitlichen Reaktionen eine Kurve, die für eine Entwicklung der Umwandlungsrate des Muttergesteins des Beckens repräsentativ ist, für die einheitliche Reaktion in Abhängigkeit von der Umwandlungsrate des Referenzgesteins anhand des zweiten Entsprechungsgesetzes abgeleitet;

iv) für jede der einheitlichen Reaktionen und für jede der Verbindungen der Klassen von Verbindungen der zweiten Zusammensetzungsdarstellung wird ein Anteil der Verbindung für die einheitliche Reaktion anhand der Kurve, die für eine Entwicklung des Referenzanteils der Verbindung repräsentativ ist, in Abhängigkeit von der Umwandlungsrate des Referenzgesteins für die einheitliche Reaktion und einer Ableitung der Kurve, die für eine Entwicklung der Umwandlungsrate des Muttergesteins für die einheitliche Reaktion in Abhängigkeit von der Umwandlungsrate des Referenzgesteins repräsentativ ist, bestimmt;

es werden die kinetischen Parameter in Bezug auf das Muttergestein und in Bezug auf die zweite Darstellung anhand wenigstens der Anteile der Komponenten der Klassen von Verbindungen der zweiten Zusammensetzungsdarstellung für jede der einheitlichen Reaktionen bestimmt.

**6.** Verfahren nach einem der vorhergehenden Ansprüche, wobei anhand der Menge und/oder Qualität der Kohlenwasserstoffe des Beckens ein Schema zur Erschließung des Beckens festgelegt und das Sedimentbecken in Abhängigkeit von der Quantifizierung und/oder dem Schema erschlossen wird.

**7.** Computerprogrammprodukt, das aus einem Kommunikationsnetz heruntergeladen werden kann und/oder auf einem computerlesbaren Datenträger gespeichert ist und/oder von einem Prozessor ausgeführt werden kann, umfassend Programmcode-Anweisungen für die Umsetzung des Verfahrens nach einem der vorhergehenden Ansprüche, wenn das Programm auf einem Computer ausgeführt wird.

**Claims**

**1.** Method implemented by a computer to determine the quantity and/or the quality of the hydrocarbons present in a sedimentary basin, the said hydrocarbons having been generated by the maturation of the organic matter of a source rock of the said basin, by means of a numerical basin simulator containing a kinetic model, the said kinetic model being applied with kinetic parameters in order to reproduce the transformation of the organic matter into at least one chemical compound under the effect of an increase in temperature, on the basis of kinetic parameters relating to the said source rock and relating to a first compositional representation,

**characterized in that** kinetic parameters relating to the said source rock and relating to a second compositional representation are determined by applying at least the following steps by means of the said kinetic model, the said first and second compositional representations being defined by a different number of classes of chemical compounds:

A) from kinetic parameters relating to at least one reference source rock and relating to the said second compositional representation, and from kinetic parameters relating to a reference rock and relating to the said second compositional representation, a compositional reference for the said second compositional representation is determined in the form of an evolution in a proportion of each of the chemical compounds of the said second compositional representation as a function of a level of transformation of the said reference rock;

B) from the said kinetic parameters relating to the said source rock and relating to the said first compositional representation, and from the said compositional reference determined for the said second compositional representation, kinetic parameters relating to the said source rock and relating to the said second compositional representation are determined;

and **in that** the said quantity and/or the said quality of the said hydrocarbons is determined from the said simulator containing at least the said kinetic model, the said kinetic model being applied with the said kinetic parameters relating to the said source rock for the said second compositional representation.

2. Method according to Claim 1, in which the said first compositional representation contains a single class of chemical compounds resulting from the thermal maturation of the said organic matter of the said source rock.

3. Method according to Claim 1, in which the said first compositional representation contains at least two classes of chemical compounds resulting from the thermal maturation of the said organic matter of the said source rock.

4. Method according to one of the preceding claims, in which step A comprises at least the following steps:

a) a first sequence of temperatures that allows a level of transformation of the said reference rock of 100% is defined, the said first sequence of temperatures being a function of the temperature as a function of time;

b) from the said kinetic model applied with the said kinetic parameters of the said reference rock and applied according to the said first sequence of temperatures, the evolution of the level of transformation of the said reference rock as a function of time is determined; from this a first law correlating the level of transformation of the said reference rock and time for the said first sequence of temperatures is deduced;

c) for each of the said reference source rocks, from the said kinetic model applied with the said kinetic parameters relating to the said reference source rock and applied according to the said first sequence of temperatures, and from the said first correlation law, (a curve representative of the evolution of the level of transformation of the said reference source rock as a function of time and) the evolution of the proportion of each of the compounds of the said classes of compounds of the said second compositional representation for the said reference source rock as a function of time are determined; and from this, for each of the said compounds of the said classes of compounds of the said second compositional representation, an evolution of the proportion of each of the said compounds of the said second compositional representation representative of each of the said reference source rocks as a function of time is deduced.

d) for each of the said compounds of the said classes of compounds of the said second compositional representation, the said compositional reference for the said second compositional representation is determined from the said evolution of the proportion of each of the said compounds representative of each of the said reference source rocks as a function of time and from the said first correlation law, the said compositional reference comprising a reference proportion curve for each of the compounds of the said second compositional representation as a function of the level of transformation of the said reference rock.

5. Method according to Claim 4, in which the step B comprises at least the following steps:

i) a second sequence of temperatures is defined, the said second sequence of temperatures being a function of the temperature as a function of time;

ii) from the said kinetic model applied with the said kinetic parameters relating to the said reference rock and applied according to the said second sequence of temperatures, the evolution of the level of transformation of the said reference rock as a function of time is determined, and a second law correlating the level of transformation of the said reference rock and time for the said second sequence of temperatures is determined;

iii) from the kinetic parameters relating to the said source rock for the said first compositional representation a plurality of individual reactions is defined; for each of the said individual reactions of the said source rock, from the said kinetic model applied with the said kinetic parameters relating to the said source rock of the said basin and relating to the said first compositional representation, the said kinetic model being applied with the said second sequence of temperatures, a curve representative of the evolution of the level of transformation of the said source rock of the said basin as a function of time for the said individual reaction is determined; and from this, for each of the said individual reactions, there is deduced a curve representative of the evolution of the level of transformation of the said source rock of the said basin for the said individual reaction as a function of the level of transformation of the said reference rock using the said second correlation law;

iv) for each of the said individual reactions and for each of the said compounds of the said classes of compounds of the said second compositional representation, a proportion of the said compound for the said individual reaction is determined from the said curve representative of the evolution of the reference proportion of the said compound as a function of the level of transformation of the said reference rock for the said individual reaction and from a derivative of the said curve representative of the evolution of the level of transformation of the said source rock for the said individual reaction as a function of the level of transformation of the said reference rock;

the said kinetic parameters relating to the said source rock and relating to the said second representation are determined from at least the said proportions of the said compounds of the said classes of compounds of the said second compositional representation for each of the said individual reactions.

6. Method according to one of the preceding claims, in which, from the said quantity and/or the said quality of the said hydrocarbons of the said basin, there is defined an exploitation diagram for the said basin, and the said sedimentary basin is exploited as a function of the said quantification and/or of the said diagram.

7. Computer program product that is downloadable from a communication network and/or recorded on a medium that is readable by computer and/or executable by a processor, comprising program code instructions for implementing the method according to one of the preceding claims, when said program is executed on a computer.

[Fig 1]

Figure 1

[Fig 2]

Figure 2

[Fig 3]

Figure 3

[Fig 4]

Figure 4

[Fig 5]

Figure 5

[Fig 6]

Figure 6

[Fig 7]

Figure 7

RÉFÉRENCES CITÉES DANS LA DESCRIPTION

**Documents brevets cités dans la description**

- EP 2110686 A
- US 8150669 B
- EP 2816377 A
- US 20140377872 A
- EP 3075947 A
- US 20160290107 A
- EP 3182176 A
- US 20170177764 A
- FR 2906482

**Littérature non-brevet citée dans la description**

- **R. BRAUN ; A. BURNHAM ; J. G. REYNOLDS ; J.E. CLARKSON.** Pyrolysis kinetics for Lacustrine and Marine Source Rocks by programmed micropyrolisis. *Energy Fuels,* 1991, vol. 5 (1), 192-204